(19)

Europäisches
Patentamt
European
Patent Office
Office européen
des brevets

(11) **EP 2 367 387 B1**

(12) **EUROPEAN PATENT SPECIFICATION**

(45) Date of publication and mention
of the grant of the patent:
**30.03.2016 Bulletin 2016/13**

(51) Int Cl.:
***H04W 72/02*** *(2009.01)*          *H04W 16/14* *(2009.01)*

(21) Application number: **11151955.9**

(22) Date of filing: **25.01.2011**

(54) **Device and method for searching selected frequency channels**

Vorrichtung und Verfahren zum Suchen ausgewählter Frequenzkanäle

Dispositif et procédé de recherche des canaux de fréquence sélectionnés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2010 US 314025 P**

(43) Date of publication of application:
**21.09.2011 Bulletin 2011/38**

(73) Proprietor: **Stichting IMEC Nederland
5656 AE Eindhoven (NL)**

(72) Inventor: **De Francisco Martin, Ruben
3512 HJ Utrecht (NL)**

(74) Representative: **Van Bladel, Marc et al
DenK iP bvba
Hundelgemsesteenweg 1114
9820 Merelbeke (BE)**

(56) References cited:
- YUCEK T ET AL: "A survey of spectrum sensing algorithms for cognitive radio applications", IEEE COMMUNICATIONS SURVEYS, IEEE, NEW YORK, NY, US, vol. 11, no. 1, 1 January 2009 (2009-01-01), pages 116-130, XP011252849, ISSN: 1553-877X
- DINESH DATLA ET AL: "Parametric Adaptive Spectrum Sensing Framework for Dynamic Spectrum Access Networks", NEW FRONTIERS IN DYNAMIC SPECTRUM ACCESS NETWORKS, 2007. DYSPAN 2007. 2ND IEEE INTERNATIONAL SYMPOSIUM ON, IEEE, PI, 1 April 2007 (2007-04-01), pages 482-485, XP031095657, ISBN: 978-1-4244-0663-0
- SIVA SUBRAMANI ET AL: "Spectrum Scanning and Reserve Channel Methods for Link Maintenance in Cognitive Radio Systems", VEHICULAR TECHNOLOGY CONFERENCE, 2008. VTC SPRING 2008. IEEE, IEEE, PISCATAWAY, NJ, USA, 11 May 2008 (2008-05-11), pages 1944-1948, XP031255904, ISBN: 978-1-4244-1644-8

EP 2 367 387 B1

## Description

### Field of the Invention

The present invention generally relates to a method and a device for searching frequency channels. The invention relates in particular to the field of cognitive radios.

### Background of the Invention

In cognitive radios there is a need to increase spectrum usage awareness. In real-time operation, the radio needs a mechanism to find an available channel, with a desired frequency bandwidth *BW,* which is then used by the cognitive radio to transmit data. One way to achieve this is to apply a spectrum sensing algorithm. Such algorithm is primarily concerned with finding an available channel for transmission rather than obtaining an accurate estimation of the spectrum within a certain frequency range. Hence, it is a task to find white spaces in the spectrum (sometimes also referred to as spectrum holes). The size of the channel may change from radio to radio, depending on the bandwidth needed by the transmission technique used by the cognitive radio.

The spectrum sensing algorithm used depends on the desired performance and complexity, as well as the level of knowledge on the signal that needs to be detected. Popular techniques are matched filter detection, cyclostationarity feature detection, and energy detection. Energy detection is the most extended technique, since signal knowledge at the spectrum sensing device is not required, and has low computational complexity.

In addition, spectrum sensing techniques may be further classified as either wideband or narrowband. Although wideband spectrum sensing has higher complexity than narrowband sensing, an empty channel can be found faster in scenarios with high spectrum occupancy. Typically, the spectrum sensing engine computes a Discrete Fourier Transform (DFT) on the sampled data, and determines spectrum occupancy in the frequency domain based on a periodogram. A solution to reduce the complexity in such systems is to use compressive sensing, in which spectral estimation is carried out while operating below Nyquist rate. In general, these solutions rely first on a Nyquist sampled signal. Afterwards, assuming that the sampled signal is sparse in frequency, the spectrum can be reconstructed by using a reduced number of DFT coefficients. These techniques require a multiplication by a reconstruction matrix, which reduces the dimensionality of the sampled signal. In addition, it also requires solving a $\ell$1-norm minimization problem, which makes these type of solutions still quite complex. In addition, classic compressive sampling techniques provide an estimation of the spectrum shape for the whole band of interest.

There is a need for a spectrum sensing algorithm for use in cognitive radios wherein the computational complexity is reduced.

In patent application US2010/035551 a technique for detecting an unoccupied frequency band is disclosed. The proposed method is based on obtaining values relating to a received signal and determining from those values energy vectors for frequency bands available on the either side of a reference frequency.

US2009/253376 also relates to spectrum sensing in a cognitive radio environment. In the method the search resolution is modified while sensing.

In the paper *"Parametric Adaptive Spectrum Sensing Framework for Dynamic Spectrum Access Networks"* (D.Datla et al., DYSPAN 2007, April 2007, pp.482-485) an adaptive spectrum sensing framework is presented that varies its parameters according to the characteristics of the spectrum of interest. Furthermore, a dynamic scheduling algorithm for spectrum sensing is proposed that can be implemented in both a conservative and non-conservative manner. This algorithm allocates different time resolutions to several portions of spectrum using a backoff mechanism.

The paper "A survey of spectrum sensing algorithms for cognitive radio applications" (T.Yucek et al., IEEE Communications Surveys, vol. 11, no. 1, pp. 116-130) identifies the spectrum sensing problem as one of the most challenging issues in cognitive radio systems. An overview of spectrum sensing methodologies is presented.

The paper *"Spectrum Scanning and Reserve Channel Methods for Link Maintenance in Cognitive Radio Systems"* (S. Subramani et al:, IEEE Vehicular Technology Conference, 2008, pp. 1944-1948) is concerned with improving spectrum utilization. Accurate estimation of spectrum occupancy is an essential step for spectrum access in distributed networks. A bidirectional and dual scanning method is analyzed that scans multiple spectrum bands to find a suitable free-channel. Moreover, secondary users' access to available spectrum could be interrupted by the arrival of primary spectrum users, forcing the well-behaved secondary users to switch to another free-channel. A pointer and adaptive reserve channel mechanism is proposed to facilitate quicker and smoother channel switching.

### Aims of the invention

The present invention aims to provide a method and device for searching a free frequency channel in a cognitive radio with a spectrum sensing algorithm of reduced complexity.

## Summary

A mechanism to search available channels in the frequency domain is proposed, defined as those frequency channels with an arbitrary selectable bandwidth that have energy or amplitude levels below a selectable threshold. By computing only those amplitude/energy frequency domain coefficients needed by the algorithm, the proposed mechanism iteratively looks for a free frequency bin, defined as a frequency bin with energy or amplitude level below a predefined threshold. The search starts at a frequency bin at random, for which the frequency domain coefficient is computed on that bin only, from the sampled input sequence. Based on an approximation on the right and left derivatives of the frequency domain function at the frequency bin searched in the current iteration, the algorithm iteratively searches for a free frequency bin by following the direction of steepest descent. The chosen step-size is such that the algorithm produces large steps in flat spectrum regions and small steps in steep regions, in order not to miss narrow portions of the spectrum with free bins. The algorithm continues until a free frequency bin is found. Once it is found, the algorithm checks if enough adjacent free bins are available to form a free channel. If so, the algorithm stops, otherwise, the algorithm starts randomly at a new frequency bin.

More in particular, the present invention relates to a method for selecting a frequency channel of given bandwidth in a cognitive radio application, whereby said method comprises the steps of

- considering a frequency bin from a plurality of frequency bins ,
- evaluating at the considered frequency bin a function indicative of the frequency occupancy,
- if the evaluation result indicates free spectrum at the considered frequency bin, repeating the previous step for a frequency bin adjacent to said considered frequency bin until the available free frequency bins constitute a frequency channel of said given bandwidth,
- if the evaluation result indicates occupied spectrum at the considered frequency bin, performing the step of evaluating for a next frequency bin determined by carrying out the following substeps :

  ∘ calculating a measure of the left and right derivative, respectively, of the function at the considered frequency bin,
  ∘ taking the measure of the left or right derivative as gradient approximation depending on which of the two provides the steepest descent,
  ∘ determining the next frequency bin by shifting the considered frequency bin over a frequency shift inversely proportional to the gradient approximation.

The proposed method indeed allows quickly finding a frequency bin that is free (meaning that that bin is available for communication, i.e. the spectrum occupancy indicating function has a value below a certain threshold level : it is not required that at that frequency no signal level is found/measured at all). By the technique of the invention it is possible to move with a large step in a region where the spectrum is relatively flat and to move with a small step where the spectrum is steep and an empty channel may be available in the neighbouring frequency bins.

In a preferred embodiment the frequency shift is proportional to the difference between a maximum and a minimum value of the function indicative of the frequency occupancy. This difference determines a step size value used in the determination of the frequency shift.

Preferably the method further comprises the step of storing the outcome of the evaluating step.

In a preferred embodiment the frequency shift is put equal to a preset fixed value if the gradient approximation exceeds a given threshold.

In an advantageous embodiment the method further comprises a step of keeping a list of already evaluated frequency bins and optionally of the function values found.

In another embodiment the step of evaluating comprises a comparison with a frequency dependent threshold value for determining whether or not there is free spectrum available at the considered frequency bin.

Advantageously, in the function indicative of the frequency occupancy a weighing (also called windowing) of the frequency spectrum is performed. In this way, spectrum leakage can be reduced.

In a particular embodiment the function indicative of the frequency spectrum is given by

$$\hat{S}_{xx}[k] = \frac{1}{M}\sum_{m=0}^{M-1}\left|\sum_{n=0}^{N} w[n]x_m(n)e^{-j2\pi nk/N}\right|^2, k = 1,...,N$$

whereby $x_m$ is the $m$-th sampled input signal in the time domain, M the number of coefficient sequences, N the number of frequency bins and w a windowing function.

In a preferred embodiment the method comprises a step of updating at least one parameter value used in the algorithm by setting a refresh variable.

Preferably the refresh variable is externally controllable, i.e. from outside the algorithm.

In another preferred embodiment the given bandwidth is selectable.

In yet another embodiment the method comprises the step of transmitting data in the selected frequency channel of given bandwidth.

The proposed method selects a frequency channel (e.g. an available frequency channel) with a selectable bandwidth in a frequency spectrum. In particular, frequency channels are channels (determined by a predetermined number of bins) with an arbitrary selectable bandwidth that has energy or amplitude levels below a selectable threshold. The method comprises sampling input data (the input data may or may not be windowed in time), setting initial parameters (e.g. search or selection step size, number of adjacent free frequency bins for having a free channel, an energy or amplitude threshold, a number of bins, a number of samples in the time domain,...), selecting a frequency bin, computing and storing an estimate of the frequency domain coefficient in the selected frequency bin and evaluating this coefficient. Dependent on the evaluation result, the selected frequency bin is an element of a selected frequency channel (determines partly a selected or available frequency channel). The method further comprises a set of iterative steps for selecting another available frequency bin (thereby creating the selected frequency channel). The set comprises calculating right and left derivatives of the coefficient at current bin, thereby selecting the direction of the search (based on steepest descent), setting the size of the search step (large in flat spectrum, small in steep spectrum), whereby the size of the step is bounded by a selectable maximum step size value, determining the next frequency bin (using this step size and search direction), computing and storing an estimate of the frequency domain coefficient in the bin, evaluating this coefficient.

In another aspect the invention relates to a device for selecting a frequency channel of given bandwidth in a cognitive radio application. The device comprises processor means arranged for evaluating at a considered frequency bin a function indicative of the spectrum occupancy and arranged for, in case there is occupied spectrum at the considered frequency bin, determining a next frequency bin to be evaluated by :

　　　◦ calculating a measure of the left and right derivative, respectively, of said function at said considered frequency bin,
　　　◦ taking said measure of said left or right derivative as gradient approximation depending on which of the two provides the steepest descent, and
　　　◦ determining said next frequency bin by shifting the considered frequency bin over a frequency shift inversely proportional to said gradient approximation.

Preferably the device also comprises spectrum detection means.

Advantageously the device further comprises a transmitter for transmitting data in the selected frequency channel of given bandwidth.

## Brief Description of the Drawings

**[0030]**

　　　Fig. 1 illustrates an example of measured spectrum in the ISM band: four 802.11gg/WiFi signals and one 802.15.4/Zig-Bee signal.
　　　Fig. 2 illustrates a computed windowed periodogram with a 1-MHz frequency resolution.
　　　Fig. 3 illustrates the performance with multi-band energy detection using random channel selection and the proposed sequential approach.
　　　Fig. 4 shows the average number of channel searches needed to find an available channel.

## Detailed Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

Furthermore, the terms first, second, third and the like in the description, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description are used for descriptive purposes and not necessarily for describing relative positions. The terms so used are interchangeable under appropriate circumstances and the embodiments of the invention described herein can operate in other orientations than described or illustrated herein.

The term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

In order to find an available channel within a certain frequency range a spectrum sensing technique for cognitive radios is proposed in one embodiment wherein a Discrete Fourier Transform (DFT) is computed on the sampled data and spectrum occupancy is determined in the frequency domain. Before computing the DFT, for instance by means of a Fast Fourier Transform (FFT), the signal may be windowed in the time domain in order to reduce spectrum leakage, using for instance a Hamming window. Next, the frequency spectrum is commonly estimated by means of a smoothed modified periodogram, i.e. by averaging the $M$ latest DFT coefficients as follows:

$$\hat{S}_{xx}[k] = \frac{1}{M}\sum_{m=0}^{M-1}\left|\sum_{n=0}^{N} w[n]x_m(n)e^{-j2\pi mk/N}\right|^2 , k = 1,..., N \tag{1}$$

where $x_m$ is the $m$-th sampled input signal in the time domain, with $m=1$ the most recent sequence and $m=M$ the least recent stored sequence; $N$ is the size of the DFT, $w$ is a window in the time domain, $n$ is the time index of $n$-th time domain sample, and $k$ is the index of $k$-th frequency domain coefficient. Different time domain windows may be used, such as a square window, or a Hamming window. $S_{xx}$ is the vector that contains all frequency domain coefficients, of length N.

In the conventional approach the windowed and smoothed periodogram described above is computed for all frequency bins, $k = 1, .., N.$ A threshold $\alpha_k$ is set to decide whether the $k$-th frequency bin is free (white) or busy (occupied), which may be or not be the same for all frequency bins. If $\hat{S}xx[k] < \alpha_k$, the frequency bin is free. If $\hat{S}xx[k] \geq \alpha_k$, the frequency bin is busy. The described system corresponds to a multi-band (or multi-carrier) energy detector. Depending on the chosen DFT size $N,$ and the sampling rate, $M$ consecutive frequency bins may be needed in order to have an available channel with desired frequency bandwidth $BW$. Once the $N$ coefficients are computed, the spectrum sensing algorithm may compare the $N$ $\hat{S}_{xx}[k]$ values, $k=1,...,N,$ one by one to the threshold $\alpha_k$, to determine what frequency bins are free. Another approach would be to use an arbitrary or predetermined order to search for a free channel; as soon as the algorithm finds a free channel, it stops the search. In both options, which are variations of the conventional approach, the spectrum sensing algorithm needs to compute $N$ $\hat{S}xx[k]$ coefficients.

In the system described above, since one is just interested in finding only one available channel, the present invention wants to avoid computing all $N$ $\hat{S}xx[k]$ coefficients, with the purpose of reducing algorithmic complexity. The main challenge is to choose the order in which $\hat{S}xx[k]$ coefficients are computed, in order to have a fast convergence to finding an available channel.

The proposed algorithm addresses the issue of iteratively finding an available channel, computing only a limited number of $\hat{S}xx[k]$ coefficients and providing fast convergence.

A set-up is considered in which a receiver samples an input signal within a chosen frequency range, yielding a discrete sequence x that contains N symbols. The k-th frequency domain coefficient of the sequence x is represented as follows:

$$\widehat{S_{xx}}[k] = \frac{1}{M}\sum_{m=0}^{M-1}\left|\sum_{n=0}^{N-1} w[n]x_m[n]e^{\frac{-j2\pi nk}{N}}\right|^2 \tag{2}$$

where $x_m$ is the m-th sampled input signal in the time domain, with m = 1 the most recent sequence and m = M the least recent stored sequence; M is the averaging factor, w is a window in the time domain containing N coefficients, n is the time index of n-th time domain sample, and k is the index of k-th frequency domain coefficient. Different time domain windows may be used, such as a square window, triangular window, Hamming window, Hanning window, Bartlett window, Parzen window, Blackman window, etc. The value of $\beta$ changes the meaning of the frequency domain coefficient. If $\beta$ = 2 is used, the frequency domain coefficient corresponds to that of a smoothed (or averaged) windowed periodogram. $\hat{S}xx[k]$ is the vector that contains all frequency domain coefficients, of length N.

The above equation (1) denotes a linear representation of a function indicative of the spectrum occupancy. Alternatively, a logarithmic representation may be used. Defined by parameters *a, b, c* as follows :

$$\widehat{S_{xx}}[k] = a \log_b \left( \frac{1}{M} \sum_{m=0}^{M-1} \left| \sum_{n=0}^{N-1} w[n] x_m[n] e^{\frac{-j2\pi nk}{N}} \right|^2 \right) + c. \quad (3)$$

For the described k-th frequency domain coefficient, the right-side (or forward) derivative approximation with parameter P is defined as follows:

$$\nabla_P^R(k) = \frac{\sum_{p=1}^{P} \widehat{S_{xx}}[(k+p)_N] - P\widehat{S_{xx}}[k]}{P(P+1)/2} \quad (4)$$

where $(\cdot)_N$ denotes modulo N. The left-side (or backward) derivative approximation with parameter P is defined as follows:

$$\nabla_P^L(k) = \frac{P\widehat{S_{xx}}[k] - \sum_{p=1}^{P} \widehat{S_{xx}}[(k-p)_N]}{P(P+1)/2} \quad (5)$$

The following definitions are used in the following. max(Z) denotes the maximum value among all elements in the vector Z, whereas min(Z) denotes the minimum value among all elements in the vector Z. For scalars s and t, min(s,t) returns the smallest element, either s or t. sign(s) denotes the sign of the scalar value s. abs(s) denotes the absolute value of the scalar s. round(s) rounds the scalar value s to the nearest integer. K is defined as the number of adjacent free frequency bins needed to have a free available channel.

Before the algorithm starts running, it is assumed that a previous state of all frequency coefficients $\hat{S}xx[k]$, k = 1, ..., N is stored and available. In addition, the following samples of the input signal are available to the algorithm: $x_m[n]$, m = 1, ..., M; n = 1, ..., N. $K \leftarrow K \cup k^i$ denotes that the element $k^i$ is added to the set of searched indices K. $k^i \in K$ means that $k^i$ is contained in the set K, $k^i \notin K$ means that $k^i$ is not contained in the set K. $K_{free}$ denotes a set of K consecutive frequency indices that form the free channel obtained by the algorithm.

The algorithm requires the following input parameters: *M, N, w, β, f, P, K* and $\alpha_k$, k = 0, ..., N-1. If the frequency domain coefficients $\hat{S}xx[k]$ are expressed in logarithmic scale, then a, b, and c are also input parameters. In addition, the following refresh variables are defined: *refreshμ, refresh∇L* and *refresh∇R*. These refresh variables are controlled externally (from outside the iterative channel search algorithm) and may be set to either *'disabled'* or *enabled'*. Their value may be modified at any time during execution of the algorithm. This allows for extra degrees of freedom in controlling the performance-complexity tradeoff of the proposed algorithm.

The algorithm described in Table 1 is proposed to find an available channel.

As it can be seen in the algorithm description, the search follows always the direction of steepest descent, based on the right and left approximations of the derivative of $\hat{S}xx[k]$. The maximum difference between two consecutive channel searches, $k^i$ and $k^{i+1}$, is limited to N/f (f is just a value used to limit the maximum step size). In one embodiment the maximum step size is defined as N/f (the difference between $k^{i+1}$ and $k^i$), so that f determines the fraction of the total number of frequency bins). As soon as the algorithm finds a set of frequency bins $K_{free}$ with $\hat{S}xx[k]\alpha_k \forall k \in K_{free}$, the search ends.

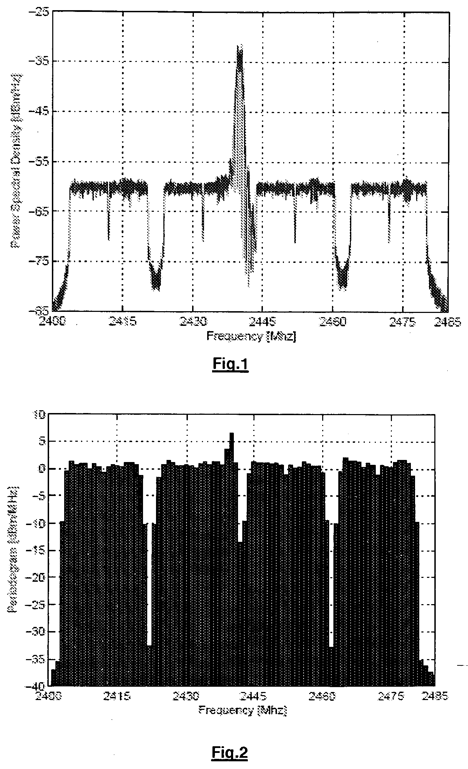

Next, some simulation results are presented to illustrate that the proposed channel search algorithm outperforms prior art solutions. The performance and algorithm complexity is compared to that of a system that employs random channel search until a free channel is found. The simulated network corresponds to the ISM band, in the 2400-2485 MHz range. 86 1-MHz channels are considered, centered at 2400, 2401, ..., 2485. In the simulated scenario, shown in Fig. 1, four WiFi (IEEE 802.11g) networks and one ZigBee (IEEE 802.15.4) network are present at all times, without changing transmission power and center frequencies.

In the simulated system the logarithmic representation of $\hat{S}xx[k]$ has been used, with parameters a = 10, b = 10, and c = 0, and $\beta$ = 2. This corresponds to a smoothed windowed periodogram expressed in dBw per frequency unit:

$$\widehat{S_{xx}}[k] = 10\log_{10}\left(\frac{1}{M}\sum_{m=0}^{M-1}\left|\sum_{n=0}^{N-1}w[n]x_m[n]e^{\frac{-j2\pi nk}{N}}\right|^2\right)$$

(6)

Table 1: Proposed iterative channel search algorithm,

**Initialization**

*1)* Initialize *i* = 1

*2)* Initialize step-size value: $\mu = \frac{2\left[\max\left(\widehat{S_{xx}}\right)-\min\left(\widehat{S_{xx}}\right)\right]}{P+1}$

*3)* Set $k^i$ to a random value between 0 and *N* - 1

*4)* Initialize set of searched indices $\kappa = \{k^i\}$

*5)* Compute and store $\widehat{S_{xx}}[k^i]$

*6)* If $\widehat{S_{xx}}[k^i] \geq \alpha_{k^i}$, go to step *8)*; otherwise, go to step 7*)*

*7)* Find a set $\kappa_{free}$ with *K* frequency indices adjacent to $k^i$, that contains $k^i$, such that $\widehat{S_{xx}}[k] < \alpha_k \forall k \in \mathcal{K}_{free}$; Compute and store $\widehat{S_{xx}}[k]\forall k \in \mathcal{K}_{free}$; as soon as a set is found, <u>the algorithm ends</u>; if such a set of size *K* can not be found, go to step *8)*

**Iterate, until *i* equals** *N* - 1

*8)* If *refresh* $\nabla^R$ is *enabled,* compute and store

$$\widehat{S_{xx}}[p], p = (k^i + 1)_N, (k^i + 2)_N, \ldots, (k^i + P)_N;$$

otherwise, go to step *10)*

*9)* $\widehat{S_{xx}}[p] < \alpha_p$ for any $p = (k^i + 1)_N, (k^i + 2)_N,..., (k^i + P)_N$, and $p \notin \kappa$, set $k^{i+1} = p$ and go to step *21)*

*10)* Compute $\nabla_P^R(k^i) = \frac{\sum_{p=1}^{P}\widehat{S_{xx}}[(k^i+p)_N]-P\widehat{S_{xx}}[k^i]}{P(P+1)/2}$

*11)* If *refresh* $\nabla^L$ is *enabled,* compute and store

$$\widehat{S_{xx}}[p], p = (k^i - 1)_N, (k^i - 2)_N, \ldots, (k^i - P)_N;$$

otherwise, go to step *13)*

*12)* If $\widehat{S_{xx}}[p] < \alpha_p$ for any $p = (k^i - 1)_N, (k^i - 2)_N, ... ,(k^i - P)_N$, and $p \notin \kappa$, set $k^{i+1} = p$ and go to step *21)*

*13)* Compute $\nabla_P^L(k^i) = \frac{P\widehat{S_{xx}}[k^i]-\sum_{p=1}^{P}\widehat{S_{xx}}[(k^i-p)_N]}{P(P+1)/2}$

*14)* If *sign* $\left(\nabla_P^L(k^i)\right)$ equals *sign* $\left(\nabla_P^L(k^i)\right)$, go to step *15)*; otherwise, go to step *16)*

*15)* If *sign* $\left(\nabla_P^L(k^i)\right)$ is *positive,* then *direction* = -1 and = $\nabla(k^i) = \nabla_P^L(k^i)$; otherwise, *direction* = 1 and $\nabla(k^i) = \nabla_P^R(k^i) =$

*16)* If abs $\left(\nabla_P^L(k^i)\right) > abs\left(\nabla_P^R(k^i)\right)$, then *direction* = -1 and $\nabla_P^L(k^i)$; otherwise, *direction* = 1 and $\nabla(k^i) = \nabla_P^R(k^i)$

*17)* It abs $\left(\frac{\mu}{\nabla(k^i)}\right) < \frac{N}{f}$, then $\Delta = \frac{\mu}{\nabla(k^i)}$; otherwise, $\Delta = -direction \times \frac{N}{f}$

*18)* Set $k^{i+1} = (round (k^i - \Delta))_N$

*19)* If $k^{i+1} \in \kappa$, then go to step *16)*; otherwise, go to step *17)*

(continued)

20) As long as $k^{i+1} \in \kappa$, set $k^{i+1} = (k^{i+1} + direction)_N$; stop when $k^{i+1} \notin \kappa$

21) Add index to set of searched indices $\kappa \leftarrow \kappa \cup k^{i+1}$

22) Compute and store $\widehat{S_{xx}}[k^{i+1}]$

23) IF $\widehat{S_{xx}}[k^{i+1}] \geq \alpha_{k^{i+1}}$, go to step 25); otherwise, go to step 24)

24) Find a set $\kappa_{free}$ with $K$ frequency indices adjacent to $k^{i+1}$, that contains $k^{i+1}$, such that

$$\widetilde{S_{xx}}[k] < \alpha_k \forall k \in \mathcal{K}_{free};$$ Compute and store $\widehat{S_{xx}}[k] \forall k \in \mathcal{K}_{free};$ as soon as such set is found, the algorithm ends; if such a set of size $K$ can not be found, go to step 25)

25) If $Refresh\mu$ is $enabled$, update $\mu = \dfrac{2\left[\max\left(\widetilde{S_{xx}}\right) - \min\left(\widetilde{S_{xx}}\right)\right]}{P+1}$

26) Set $i = i + 1$

Each frequency bin corresponds to a bandwidth of 1 MHz (1-MHz frequency resolution), which is considered in this example also as the necessary bandwidth to form a free channel, i.e. K = 1. A summary of all system parameters used in this simulation is provided in Table 2, which are parameters required by the proposed algorithm. A sampling rate of 172 MHz (2x86MHz) has been used. Note that, for this choice of parameters, the algorithm limits the maximum step between consecutive searches to N/16. In this case, the 3 refresh variables have been set to 0. In a practical system, a refreshing rate may be defined in order to set the refresh variables ($refresh\mu$, $refresh\nabla^L$, and $refresh\nabla^R$) to enabled periodically, e.g. every 10, 100 or 1000 ms, or after a certain number of spectrum sensing observations. Also, for simplicity, $\alpha_k = \alpha$, k = 1, ..., N has been used. For each SNR value in the simulation, a is chosen such that $P_{fa}$ (probability of false alarm) values are obtained below 10%, while providing high $P_d$ (probability of detection), both for the proposed approach and the random channel search approach.

Table 2: Simulation parameters

| Parameter | Value |
|---|---|
| a | 10 |
| b | 10 |
| c | 0 |
| M | 1 |
| N | 86 |
| w | Hamming |
| $\beta$ | 2 |
| f | 16 |
| P | 2 |
| K | 1 |
| $refresh\mu$ | 0 |
| $refresh\nabla^L$ | 0 |
| $refresh\nabla^R$ | 0 |

For this particular choice of system parameters, the proposed algorithm can be simplified. This is particularly due to the fact that the refresh variables are disabled and K = 1. The resulting simplified (equivalent) algorithm is provided in Table 3. Table 3 summarizes the main benefits contributed by the proposed algorithm : heuristics to find the best direction (steps 14-16), formula to set $k^{i+1}$ from $k^i$ (steps 17-18), and computation of the step-size $\mu$ (step 2).

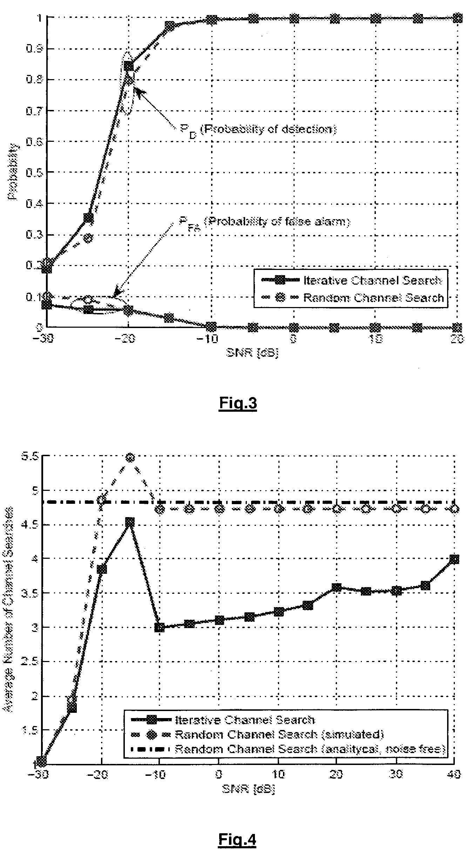

After computing the smoothed windowed periodogram with the mentioned system parameters, the resulting periodogram (for the full range of interest) is depicted in Fig.2. The performance in terms of $P_d$ and $P_{fa}$ is shown in Fig. 3. As it can be observed, the performance of the proposed and random approaches is quite similar as expected. This is due to the fact that the performance is limited by that of the detection technique used: energy detection.

Table 3: Simplified iterative channel search algorithm for the simulated scenario

**Initialization**

*1)* Initialize $i = 1$

*2)* Initialize step-size value: $\mu = \dfrac{2\left[\max\left(\widehat{S_{xx}}\right) - \min\left(\widehat{S_{xx}}\right)\right]}{P+1}$

*3)* Set $k^i$ to a random value between 0 and $N - 1$

*4)* Initialize set of searched indices $\kappa = \{k^i\}$

*5)* Compute and store $\widehat{S_{xx}}[k^i]$

*6)* If $\widehat{S_{xx}}[k^i] \geq \alpha_{k^i}$, go to step *8)*; otherwise, <u>the algorithm ends</u>

**Iterate, until** *i* **equals** $N - 1$

*10)* Compute $\nabla_P^R(k^i) = \dfrac{\sum_{p=1}^P \widehat{S_{xx}}[(k^i+p)_N] - P\widehat{S_{xx}}[k^i]}{P(P+1)/2}$

*13)* Compute $\nabla_P^L(k^i) = \dfrac{P\widehat{S_{xx}}[k^i] - \sum_{p=1}^P \widehat{S_{xx}}[(k^i-p)_N]}{P(P+1)/2}$

*14)* If *sign* $\left(\nabla_P^L(k^i)\right)$ equals *sign* $\left(\nabla_P^L(k^i)'\right)$, go to step *15)*; otherwise, go to step *16)*

*15)* If *sign* $\left(\nabla_P^L(k^i)\right)$ is *positive,* then *direction* = -1 and $\nabla(k^i) = \nabla_P^L(k^i)$; otherwise, *direction* = 1 and $\nabla(k^i) = \nabla_P^R(k^i)$

*16)* If abs $\left(\nabla_P^L(k^i)\right) >$ *abs* $\left(\nabla_P^R(k^i)\right)$, then *direction* = -1 and $\nabla(k^i) = \nabla_P^L(k^i)$; otherwise, *direction* = 1 and $\nabla(k^i) = \nabla_P^R(k^i)$

*17)* If *abs* $\left(\dfrac{\mu}{\nabla(k^i)}\right) < \dfrac{N}{I}$, then $\Delta = \dfrac{\mu}{\nabla(k^i)}$; otherwise, $\Delta = -direction \times \dfrac{N}{I}$

*18)* Set $k^{i+1} = (round\ (k^i - \Delta))_N$

*19)* If $k^{i+1} \in \kappa$, then go to step 16); otherwise, go to step *17)*

*20)* As long as $k^{i+1} \in \kappa$, set $k^{i+1} = (k^{i+1} + direction)_N$; stop when $k^{i+1} \notin \kappa$

*21)* Add index to set of searched indices $\kappa \leftarrow \kappa \cup k^{i+1}$

*22)* Compute and store $\widehat{S_{xx}}[k^{i+1}]$

*23)* If $\widehat{S_{xx}}[k^{i+1}] \geq \alpha_{k^{i+1}}$, go to step *26)*; otherwise, <u>the algorithm ends</u>

*26)* Set $i = i + 1$

In the proposed algorithm a complexity reduction can be obtained. First of all, note that only the subset of spectrum coefficients needed by the algorithm is computed, which is much lower in average than the complexity of a system that computes all N = 86 coefficients at each spectrum sensing operation. The complexity of the proposed algorithm, in terms of the average number of channel searches needed to find a free channel, is shown in Fig. 4. Note that in most cases four different searches (iterations in the algorithm) are carried out in average at most, which is much lower than that of the full complexity (conventional system) with 86 coefficient computations (in this particular system). A considerable gain is also shown here when compared to the random search approach. In fact, the number of searches needed with random search dramatically increases as the proportion [free channels]/[total channels] decreases. This makes random channel search quite impractical in situations where the spectrum is very crowded (as often seen in the ISM band). In the low SNR region, although a channel is found quickly, the channel is often not free (missed detection event), since due to the poor SNR conditions the energy detector makes an error.

In one embodiment, the proposed approach is thus a fast converging algorithm that can greatly reduce the complexity of the spectrum sensing task, in systems that combine multiband sensing and energy detection. The algorithm is especially helpful in scenarios with a limited number of available channels.

One particularly interesting application field of the proposed sensing method is that of Body Area Networks.

Medical Body Area Networks (MBAN) are a key technology to provide wireless connectivity to healthcare services. In the near future, these technologies may operate in frequency ranges where the status of secondary service will be granted, such as the 2360-2400 MHz band in the United States and the 2483.5-2500 MHz band in Europe. Future MBAN radios operating in these bands will need to employ listen-before-talk (LBT) mechanisms in order to coexist with primary users without harmful interference, meaning that spectrum sensing is carried out before transmission.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

While the above detailed description has shown, described, and pointed out novel features of the invention as applied to various embodiments, it will be understood that various omissions, substitutions, and changes in the form and details of the device or process illustrated may be made by those skilled in the technology without departing from the scope of the invention.

## Claims

1. A method for selecting a frequency channel of given bandwidth in a cognitive radio application comprising the steps of

   - considering a frequency bin from a plurality of frequency bins,
   - evaluating at said considered frequency bin a function indicative of the frequency occupancy,
   - if the evaluation result indicates free spectrum at said considered frequency bin, repeating the previous step for a frequency bin adjacent to said considered frequency bin until the free frequency bins constitute a frequency channel of said given bandwidth,
   - if the evaluation result indicates occupied spectrum at said considered frequency bin, performing said step of evaluating for a next frequency bin determined by carrying out the following substeps :

     ◦ calculating a measure of the left and right derivative, respectively, of said function at said considered frequency bin,
     ◦ taking said measure of said left or right derivative as gradient approximation depending on which of the two provides the steepest descent,
     ◦ determining said next frequency bin by shifting the considered frequency bin over a frequency shift inversely proportional to said gradient approximation.

2. Method for selecting as in claim 1, whereby said frequency shift is proportional to the difference between a maximum and a minimum value of said function indicative of the frequency occupancy.

3. Method for selecting as in claim 1 or 2, further comprising the step of storing the outcome of the step of evaluating.

4. Method for selecting as in any of claims 1 to 3, whereby if said gradient approximation exceeds a given threshold, said frequency shift equals a preset fixed value.

5. Method for selecting as in any of the previous claims, further comprising a step of keeping a list of evaluated frequency bins.

6. Method for selecting as in any of the previous claims, wherein said step of evaluating comprises a comparison with a frequency dependent threshold value for determining whether or not there is free spectrum at said considered frequency bin.

7. Method for selecting as in any of the previous claims, whereby in said function indicative of the frequency occupancy a weighing of the frequency spectrum is performed.

8. Method for selecting as in claim 7, whereby said function indicative of the frequency spectrum is given by

$$\hat{S}_{xx}[k] = \frac{1}{M} \sum_{m=0}^{M-1} \left| \sum_{n=0}^{N} w[n] x_m(n) e^{-j2\pi nk/N} \right|^2 , k = 1,...,N$$

whereby $x_m$ is the m-th sampled input signal in the time domain, M the number of coefficient sequences, N the number of frequency bins and w a windowing function.

9. Method for selecting as in any of the previous claims, comprising the step of updating at least one parameter value by setting a refresh variable.

10. Method for selecting as in claim 9, whereby said refresh variable is controllable.

11. Method for selecting as in any of the previous claims, whereby said given bandwidth is selectable.

12. Method for selecting as in any of the previous claims, further comprising the step of transmitting data in said selected frequency channel of given bandwidth.

13. Device for selecting a frequency channel of given bandwidth in a cognitive radio application comprising processor means arranged for evaluating at a considered frequency bin a function indicative of the spectrum occupancy and arranged for, in case there is occupied spectrum at the considered frequency bin, determining a next frequency bin to be evaluated by performing :

   ◦ calculating a measure of the left and right derivative, respectively, of said function at said considered frequency bin,
   ◦ taking said measure of said left or right derivative as gradient approximation depending on which of the two provides the steepest descent,
   ◦ determining said next frequency bin by shifting the considered frequency bin over a frequency shift inversely proportional to said gradient approximation.

14. Device for selecting as in claim 13, further comprising spectrum detection means.

15. Device for selecting as in claim 13 or 14, further comprising a transmitter for transmitting data in said selected frequency channel of given bandwidth.

**Patentansprüche**

1. Verfahren zur Auswahl eines Frequenzkanals mit einer gegebenen Bandbreite in einer kognitiven Funkanwendung, die folgenden Schritte umfassend

   - Berücksichtigen einer Frequenzlinie aus einer Vielzahl von Frequenzlinien,
   - Bewerten einer Funktion auf der besagten berücksichtigten Frequenzlinie, die auf die Frequenzbelegung hinweist,
   - falls das Bewertungsergebnis auf ein freies Spektrum auf der besagten berücksichtigten Frequenzlinie hinweist, Wiederholen des vorherigen Schrittes mit einer Frequenzlinie, die an die besagte berücksichtigte Frequenzlinie angrenzt, bis die freien Frequenzlinien einen Frequenzkanal mit der besagten gegebenen Bandbreite darstellen,
   - falls das Bewertungsergebnis auf ein belegtes Spektrum auf der besagten berücksichtigten Frequenzlinie hinweist, Durchführen des besagten Schrittes der Bewertung einer nächsten Frequenzlinie, die durch die Durchführung der folgenden Unterschritte bestimmt ist:

   ◦ Berechnen eines Maßes für die jeweils linke und rechte Ableitung der besagten Funktion auf der besagten berücksichtigten Frequenzlinie,
   ◦ Annahme des besagten Maßes der besagten linken oder rechten Ableitung als Gradienten-Näherung in Abhängigkeit davon, welcher der beiden den steilsten Abfall ergibt,
   ◦ Bestimmen der besagten nächsten Frequenzlinie durch Verschieben der berücksichtigten Frequenzlinie über eine Frequenzverschiebung umgekehrt proportional zur besagten Gradienten-Näherung.

2. Auswahlverfahren nach Anspruch 1, wobei die besagte Frequenzverschiebung proportional zum Unterschied zwischen einem Höchstwert und einem Mindestwert der besagten Funktion verläuft, die auf die Frequenzbelegung hinweist.

3. Auswahlverfahren nach Anspruch 1 oder 2, das darüber hinaus den Schritt des Speicherns des Ergebnisses des Bewertungsschrittes umfasst.

4. Auswahlverfahren nach irgendeinem der Ansprüche 1 bis 3, wobei die besagte Frequenzverschiebung, falls die besagte Gradienten-Näherung einen bestimmten Grenzwert übersteigt, gleich einem voreingestellten festen Wert ist.

5. Auswahlverfahren nach irgendeinem der vorherigen Ansprüche, das darüber hinaus einen Schritt zum Behalten einer Liste von bewerteten Frequenzlinien umfasst.

6. Auswahlverfahren nach irgendeinem der vorherigen Ansprüche, wobei der besagte Bewertungsschritt einen Vergleich mit einem frequenzabhängigen Grenzwert umfasst, um zu bestimmen, ob ein freies Spektrum auf der besagten berücksichtigten Frequenzlinie vorhanden ist oder nicht.

7. Auswahlverfahren nach irgendeinem der vorherigen Ansprüche, wobei in der besagten Funktion, die auf die Frequenzbelegung hinweist, eine Bewertung des Frequenzspektrums durchgeführt wird.

8. Auswahlverfahren nach Anspruch 7, wobei die besagte Funktion, die auf das Frequenzspektrum hinweist, gegeben ist durch

$$\hat{S}_{xx}[k] = \frac{1}{M} \sum_{m=0}^{M-1} \left| \sum_{n=0}^{N} w[n] x_m(n) e^{-j 2\pi n k / N} \right|^2, k = 1,...,N$$

wobei $x_m$ das m. abgetastete Eingangssignal im Zeitbereich ist, M die Anzahl der Koeffizienten-Sequenzen, N die Anzahl der Frequenzlinien und w eine Fensterfunktion.

9. Auswahlverfahren nach irgendeinem der vorherigen Ansprüche, den Schritt der Aktualisierung von zumindest einem Parameterwert durch das Setzen einer Aktualisierungsvariablen umfassend.

10. Auswahlverfahren nach Anspruch 9, wobei die besagte Aktualisierungsvariable steuerbar ist.

11. Auswahlverfahren nach irgendeinem der vorherigen Ansprüche, wobei die besagte gegebene Bandbreite wählbar ist.

12. Auswahlverfahren nach irgendeinem der vorherigen Ansprüche, das darüber hinaus den Schritt der Datenübertragung in den besagten ausgewählten Frequenzkanal mit der gegebenen Bandbreite umfasst.

13. Gerät zur Auswahl eines Frequenzkanals mit einer gegebenen Bandbreite in einer kognitiven Funkanwendung, das Prozessormittel umfasst, die ausgeführt sind, um auf einer berücksichtigten Frequenzlinie eine Funktion zu bewerten, die auf die Frequenzbelegung hinweist und die ausgeführt sind, um für den Fall, dass auf der berücksichtigten Frequenzlinie ein belegtes Spektrum ist, eine nächste Frequenzlinie zu bestimmen, die folgendermaßen zu bewerten ist:

○ Berechnen eines Maßes für die jeweils linke und rechte Ableitung der besagten Funktion auf der besagten berücksichtigten Frequenzlinie,
○ Annahme des besagten Maßes der besagten linken oder rechten Ableitung als Gradienten-Näherung in Abhängigkeit davon, welcher der beiden den steilsten Abfall ergibt,
○ Bestimmen der besagten nächsten Frequenzlinie durch Verschieben der berücksichtigten Frequenzlinie über eine Frequenzverschiebung umgekehrt proportional zur besagten Gradienten-Näherung.

14. Auswahlgerät nach Anspruch 13, das darüber hinaus auch Mittel zum Erkennen eines Spektrums umfasst.

15. Auswahlgerät nach Anspruch 13 oder 14, das darüber hinaus einen Sender zur Datenübertragung in den besagten ausgewählten Frequenzkanal mit der gegebenen Bandbreite umfasst.

**Revendications**

1. Procédé pour sélectionner un canal de fréquence de largeur de bande donnée dans une application de radio cognitive comprenant les étapes de :

   - la considération d'un segment de fréquence à partir d'une pluralité de segments de fréquence,
   - l'évaluation, audit segment de fréquence considéré, d'une fonction indicative de l'occupation de fréquence,
   - si le résultat d'évaluation indique un spectre libre, audit segment de fréquence considéré, la répétition de l'étape précédente pour un segment de fréquence adjacent audit segment de fréquence considéré jusqu'à ce que les segments de fréquence libres constituent un canal de fréquence de ladite largeur de bande donnée,
   - si le résultat d'évaluation indique un spectre occupé, audit segment de fréquence considéré, la réalisation de ladite étape de l'évaluation pour un segment de fréquence suivant déterminé en réalisant les sous-étapes suivantes :

     ○ le calcul d'une mesure des dérivées gauche et droite, respectivement, de ladite fonction audit segment de fréquence considéré,
     ○ la considération de ladite mesure de ladite dérivée gauche ou droite en tant qu'approximation de gradient, en fonction de celle des deux qui fournit la descente la plus abrupte,
     ○ la détermination dudit segment de fréquence suivant en faisant glisser le segment de fréquence considéré sur un glissement de fréquence inversement proportionnel à ladite approximation de gradient.

2. Procédé pour sélectionner selon la revendication 1, dans lequel ledit glissement de fréquence est proportionnel à la différence entre une valeur maximum et une valeur minimum de ladite fonction indicative de l'occupation de fréquence.

3. Procédé pour sélectionner selon la revendication 1 ou 2, comprenant en outre l'étape du stockage du résultat de l'étape de l'évaluation.

4. Procédé pour sélectionner selon l'une quelconque des revendications 1 à 3, dans lequel, si ladite approximation de gradient dépasse un seuil donné, ledit glissement de fréquence est égal à une valeur fixe préréglée.

5. Procédé pour sélectionner selon l'une quelconque des revendications précédentes, comprenant en outre une étape du maintien d'une liste de segments de fréquence évalués.

6. Procédé pour sélectionner selon l'une quelconque des revendications précédentes, dans lequel ladite étape de l'évaluation comprend une comparaison à une valeur de seuil dépendante de la fréquence pour déterminer s'il y a un spectre libre audit segment de fréquence considéré ou non.

7. Procédé pour sélectionner selon l'une quelconque des revendications précédentes, dans lequel, dans ladite fonction indicative de l'occupation de fréquence, une pondération du spectre de fréquence est réalisée.

8. Procédé pour sélectionner selon la revendication 7, dans lequel ladite fonction indicative du spectre de fréquence est donnée par :

$$\hat{S}_{xx}[k] = \frac{1}{M} \sum_{m=0}^{M-1} \left| \sum_{n=0}^{N} w[n] x_m(n) e^{-j2\pi nk/N} \right|^2, k = 1,\dots,N$$

dans lequel $x_m$ est le m-ième signal d'entrée échantillonné dans le domaine temporel, M le nombre de séquences de coefficient, N le nombre de segments de fréquence et w une fonction de fenêtrage.

9. Procédé pour sélectionner selon l'une quelconque des revendications précédentes, comprenant l'étape de l'actualisation d'au moins une valeur de paramètre en réglant une variable de rafraîchissement.

**10.** Procédé pour sélectionner selon la revendication 9, dans lequel ladite variable de rafraîchissement peut être commandée.

**11.** Procédé pour sélectionner selon l'une quelconque des revendications précédentes, dans lequel ladite largeur de bande donnée est sélectionnable.

**12.** Procédé pour sélectionner selon l'une quelconque des revendications précédentes, comprenant en outre l'étape de la transmission de données dans ledit canal de fréquence sélectionné de largeur de bande donnée.

**13.** Dispositif pour sélectionner un canal de fréquence de largeur de bande donnée dans une application de radio cognitive comprenant des moyens processeurs agencés pour évaluer, à un segment de fréquence considéré, une fonction indicative de l'occupation de spectre et agencés pour, au cas où il y a un spectre occupé au segment de fréquence considéré, déterminer un segment de fréquence suivant destiné à être évalué en réalisant:

    ◦ le calcul d'une mesure des dérivées gauche et droite, respectivement, de ladite fonction audit segment de fréquence considéré,
    ◦ la considération de ladite mesure de ladite dérivée gauche ou droite en tant qu'approximation de gradient, en fonction de la dérivée de celles des deux qui fournit la descente la plus abrupte,
    ◦ la détermination dudit segment de fréquence suivant en faisant glisser le segment de fréquence considéré sur un glissement de fréquence inversement proportionnel à ladite approximation de gradient.

**14.** Dispositif pour sélectionner selon la revendication 13, comprenant en outre des moyens de détection de spectre.

**15.** Dispositif pour sélectionner selon la revendication 13 ou 14, comprenant en outre un transmetteur pour transmettre des données dans ledit canal de fréquence sélectionné de largeur de bande donnée.

**Fig.1**

**Fig.2**

**Fig.3**

**Fig.4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010035551 A
- US 2009253376 A

**Non-patent literature cited in the description**

- **D. DATLA et al.** Parametric Adaptive Spectrum Sensing Framework for Dynamic Spectrum Access Networks. *DYSPAN,* 20 April 2007, vol. 07, 482-485
- **T. YUCEK et al.** A survey of spectrum sensing algorithms for cognitive radio applications. *IEEE Communications Surveys,* vol. 11 (1), 116-130
- **S. SUBRAMANI et al.** Spectrum Scanning and Reserve Channel Methods for Link Maintenance in Cognitive Radio Systems. *IEEE Vehicular Technology Conference,* 2008, 1944-1948